# EUROPÄISCHE PATENTANMELDUNG

(11) **EP 3 996 227 A1**
(43) Veröffentlichungstag der Anmeldung: **11.05.2022**
(21) Anmeldenummer: 20206510.8
(22) Anmeldetag: 09.11.2020
(51) Int. Cl.: H02J 3/14, H02J 3/00, F24F 11/47, F24F 11/54, H02J 3/28, H02J 3/38, H02J 13/00

(54) **VERFAHREN ZUR STEUERUNG DEZENTRALER LASTEN IN EINEM ENERGIEVERBUNDSYSTEM**

(71) Anmelder: MeteoViva GmbH, 52428 Jülich (DE)
(72) Erfinder: WERNER, Markus, 52428 Jülich (DE); BLUM, Jonas, 52428 Jülich (DE); HARDT, Stefan, Dr., 52428 Jülich (DE)
(74) Vertreter: dompatent von Kreisler Selting Werner - Partnerschaft von Patent- und Rechtsanwälten mbB

(57) **Zusammenfassung**

Verfahren sowie Vorrichtung zur Steuerung dezentraler Lasten in einem Energieverbund, mit mindestens einer Last, wobei es sich bei der Last insbesondere um ein Gebäude oder einen Gebäudekomplex handelt. Dabei ist die mindestens eine Last mittels einer Energieversorgungsleitung mit einer zentralen Energieversorgung verbunden zur Bereitstellung von Energie an die Last zur Klimasteuerung. Weiterhin ist mindestens eine steuerbare Last vorgesehen. Dabei umfasst das Verfahren die Schritte: Ermitteln einer Lastprognose für mindestens eine Last; Vorgeben eines Klimaprofils für mindestens eine steuerbare Last. Erstellen eines Einsatzplans für mindestens eine steuerbare Last auf Grundlage der Lastprognosen und/oder Energiepreise und/oder Leistungspreise; und Ansteuern der mindestens einen steuerbaren Last auf Basis des Einsatzplans.

## Beschreibung

Die vorliegende Erfindung betrifft ein Verfahren zur Steuerung dezentraler Lasten in einem Energieverbundsystem sowie ein solches Energieverbundsystem.

### BEGRIFFSDEFINITIONEN

Als Last wird ein oder mehrere Verbraucher, Energiespeicher und Energieerzeuger von Energie innerhalb eines Gebäudes oder Gebäudekomplexes verstanden. Zu unterscheiden sind steuerbare und nicht steuerbare Lasten.

Steuerbare Lasten sind steuerbare Verbraucher (z.B. HLK-Anlagen) und/oder optional vorhandene steuerbare eigene Energiespeicher und Energieerzeuger innerhalb eines Gebäudes oder Gebäudekomplexes, deren Lastverhalten durch Steuersignale von außerhalb des Gebäudes beeinflusst werden kann.

Nicht steuerbare Lasten sind Verbraucher (z.B. HLK-Anlagen) und/oder optional vorhandene eigene Energiespeicher und Energieerzeuger innerhalb eines Gebäudes oder Gebäudekomplexes, deren Lastverhalten von außerhalb nicht beeinflusst, aber gemessen werden kann.

Klimaprofil beschreibt den zeitlichen Verlauf der unteren und oberen Grenze zulässiger Raumzustände, ausgedrückt durch die Klimakenngrößen.

Klimakenngröße ist der gewünschte, messbare Zustand des Raumklimas, z.B. Raumtemperatur, Luftfeuchte oder CO2-Gehalt der Raumluft.

Komfortklimaband ist das zulässige Band zwischen der unteren und oberen Grenze des Klimaprofils innerhalb dessen sich die Klimakenngröße bewegen soll.

Energieverbund ist die Zusammenfassung von einer Energieversorgung, nicht steuerbaren und steuerbaren Lasten.

Energieverbundsystem fasst einen Energieverbund, eine zentrale Steuerungseinrichtung und die Datenübertragung zusammen.

Der Einsatzplan gibt die Verteilung der Energie vor insbesondere mit den mindestens erforderlichen Betriebszeiten sowie zulässigen Wertebereichen der Verteilung zur Steuerung der im Energieverbund vorhandenen steuerbaren Lasten.

Energiepreis beschreibt den Preis für den Verbrauch oder die Erzeugung einer Menge Energieinhalt eines Energieträgers.

Leistungspreis beschreibt den Preis für die bereitzustellende Leistung einer Energieversorgung unabhängig vom Energieverbrauch.

### STAND DER TECHNIK

In bisherigen Energieverbundsystemen erfolgt eine unabhängige Energieversorgung der vorhandenen Lasten. Bei den Lasten handelt es sich insbesondere um Gebäude oder einen Gebäudekomplex mit darin verbauten Verbrauchern, optionalen Speichern und/oder Erzeugern von Energie. Mittels Energieversorgungsleitungen sind die einzelnen Lasten mit einer zentralen Energieversorgung zur Bereitstellung von Energie an die jeweiligen Lasten verbunden. Bei der Energie kann es sich beispielsweise um elektrische und/oder thermische Energie handeln. Durch die zentrale Energieversorgung beispielsweise eines regionalen Energieversorgers werden individuell und unabhängig die Verbraucher z.B. HLK-Anlagen (Heizung, Lüftung, Klima) mit Energie versorgt, um Klimabedingungen in den einzelnen Gebäuden zu erfüllen. Dabei wird für jedes Gebäude separat und voneinander unabhängig der zeitliche Verlauf einer Klimakenngröße als Klimaprofil vorgegeben. Üblicherweise ist dabei eine Untergrenze und eine Obergrenze dieser Klimakenngröße vorgesehen, innerhalb derer ein entsprechendes Wohlfühlklima in dem Gebäude vorliegt. So kann es sich beispielsweise bei der Klimakenngröße, um die Temperatur in dem Gebäude handeln. Die Temperatur weist dabei eine Untergrenze und eine Obergrenze auf, innerhalb derer die Raumtemperatur als angenehm empfunden wird.

In EP 1 134 508 wird ein Verfahren offenbart, bei dem die Steuerung des Klimas eines einzelnen Gebäudes oder Gebäudekomplexes optimiert werden kann, sodass stets ein möglichst niedriger Energiebedarf vorliegt zur Erfüllung des gewünschten Klimaprofils. Dabei schlägt EP 1 134 508 die Einbeziehung von Lastprognosen für das einzelne Gebäude vor, insbesondere im Hinblick auf die prognostizierte Entwicklung von Wettergrößen wie beispielsweise Außentemperatur und/oder Sonneneinstrahlung. Zusätzlich können Nutzungszeiten definiert sein und sich im vorgegebenen, zu erfüllenden Klimaprofil wiederfinden. Eine Kopplung von anderen Gebäuden/Lasten innerhalb desselben Energieverbundes findet nicht statt.

Auch wenn mehrere gemäß der EP 1 134 508 optimal angesteuerte Gebäude innerhalb eines Energieverbundes vorgesehen sind, kann es dennoch innerhalb des Energieverbunds zu nachteiligen Effekten kommen. Starten beispielsweise mehrere Lasten gleichzeitig und unabhängig aus der Nachtabsenkung, um die Klimavorgabe für die Nutzungszeiten des jeweiligen Gebäudes zu erreichen, kann es im Energieverbund zu unerwünschten Lastspitzen kommen. Somit muss der Energieversorger entweder ausreichend Grundkapazität zur Bereitstellung der erforderlichen Energie für eine solche Lastspitze vorsorglich vorsehen, was mit erhöhten Kosten einhergeht. Oder es können innerhalb einer solchen Lastspitze einzelne oder alle Gebäude nicht ausreichend mit Energie versorgt werden, sodass unter Umständen innerhalb dieser Gebäude die Vorgaben des jeweiligen Klimaprofils nicht erreicht werden.

Darüber hinaus ist bekannt, dass Energiepreise Tageszeiten abhängig sein können und sich insbesondere nach einem prognostizierten Verbrauch richten. Ist für eine bestimmte Uhrzeit ein erhöhter Energieverbrauch prognostiziert, der zu Kapazitätsengpässen im Energieverbund führen kann, so kann von dem Energieversorger ein erhöhter Arbeits- und/oder Leistungspreis für diese Tageszeit angesetzt werden. Dabei fallen hohe Kosten zusammen mit hohen Lasten beispielsweise für die Zeit, zu der üblicherweise Gebäude aus der Nachtabsenkung kommen.

### BESCHREIBUNG DER ERFINDUNG

Aufgabe der vorliegenden Erfindung ist es, ein Verfahren zur Steuerung dezentraler Lasten in einem Energieverbund sowie ein Energieverbundsystem bereitzustellen, welches optimal die dezentralen Lasten so steuert, dass kumulierte Lastspitzen und/oder Energiekosten im Energieverbund minimiert werden.

Die Aufgabe wird gelöst durch das Verfahren gemäß Anspruch 1 sowie das Energieverbundsystem gemäß Anspruch 11.

Die Erfindung betrifft ein Verfahren zur Steuerung dezentraler Lasten in einem Energieverbund. Dabei weist der Energieverbund mindestens eine Last auf, wobei es sich bei der Last insbesondere um einen Verbraucher, und vorzugsweise einen Energieerzeuger und/oder Energiespeicher innerhalb eines Gebäudes oder eines Gebäudekomplexes handelt. Dabei ist die mindestens eine Last mittels einer Energieversorgungsleitung mit einer zentralen Energieversorgung verbunden. Sie dient der Bereitstellung von Energie an die Last beispielsweise zur Klimasteuerung innerhalb des jeweiligen Gebäudes oder des Gebäudekomplexes. Die Klimasteuerung erfolgt beispielsweise mit HLK-Anlagen (Heizanlagen, Lüftungsanlagen und/oder Klimaanlagen).

Innerhalb des Energieverbunds ist mindestens eine steuerbare Last vorgesehen. Dabei ist die steuerbare Last zu verstehen als ein Gebäude oder Gebäudekomplex mit steuerbaren Verbrauchern, optionalen Speichern und/oder Erzeugern die durch Steuersignale von außen beeinflusst und verändert werden können, beispielsweise durch eine zentrale Steuerungseinheit. Insbesondere handelt es sich bei einer solchen steuerbaren Last um ein Gebäude oder Gebäudekomplex, welches beispielsweise eine Steuerung gemäß der EP 1 134 508 aufweist.

Erfindungsgemäß weist das Verfahren die Schritte auf:
1. Ermitteln mindestens einer Lastprognose für steuerbare und nicht steuerbare Lasten;
2. Erstellen mindestens eines Einsatzplans für steuerbare Lasten auf Grundlage der Lastprognosen;
3. Vorgeben mindestens eines Klimaprofils zur Optimierung von steuerbaren Lasten, sofern sie der Klimasteuerung dienen;
4. Ansteuern der mindestens einer steuerbaren Last auf Basis des Einsatzplans und des Klimaprofils erzeugter Steuerdaten.

Somit wird zunächst für mindestens eine Last eine Lastprognose erstellt, sodass Kenntnis über den voraussichtlich zu erwartenden Energieverbrauch der jeweiligen Last besteht. Hierbei werden die Lastprognosen erstellt auf historischen Verbrauchsdaten der jeweiligen Lasten und können weiterhin externe Einflüsse berücksichtigen, wie beispielsweise die Außentemperatur, Sonneneinstrahlung, voraussichtliche Nutzung und dergleichen. Aus der Erkenntnis des zu erwartenden Energieverbrauchs auf Grundlage der ermittelten Lastprognosen wird sodann ein gebäudeübergreifender Einsatzplan für die jeweiligen Lasten in den Gebäuden erstellt, welcher den Einsatz der einzelnen Lasten zeitlich teilweise oder ganz freigibt oder sperrt. Unter Berücksichtigung des Einsatzplans wird der Betrieb der einzelnen steuerbaren Lasten optimiert gesteuert. Somit ist eine gemeinsame, optimierte und zentrale Steuerung für alle steuerbaren Lasten innerhalb des Energieverbundes gegeben.

Somit kann innerhalb des Energieverbunds eine Ansteuerung der einzelnen verteilten Lasten erfolgen, sodass eine gegenseitige, nachteilige Beeinflussung der einzelnen Gebäude und Gebäudekomplexe innerhalb eines Energieverbundes gerade verhindert wird.

Es wird sichergestellt, dass der zeitliche Verlauf einer einzuhaltenden Klimakenngröße (z.B. Raumtemperatur) das zulässige Komfortband zwischen Ober- und Untergrenze des Klimaprofils nicht verlässt und somit in den jeweiligen Gebäuden ein angenehm empfundenes Klima erzeugt wird. Hierzu wird insbesondere der gesamte Steuerparameterbereich der einzelnen Lasten ausgenutzt. Handelt es sich beispielsweise bei der Klimakenngröße um die Raumtemperatur, wird für eine bestimmte Last, nach einem anfänglichen Überschreiten einer Untergrenze des Klimaprofils, keine weitere oder weniger Wärme durch die HLK-Anlagen verbraucht oder erzeugt. Zu diesem Zeitpunkt wird sodann keine Energie mehr oder weniger Energie benötigt. Die Bausubstanz wird dabei als träger Wärmespeicher ausgenutzt.

Mit dem Einsatzplan in Kombination mit optimierten Steuerdaten ist eine optimierte, zentrale Steuerung des Einsatzes der steuerbaren Lasten in einem Energieverbundsystem über Gebäudegrenzen hinausgegeben.

Vorzugsweise ist mehr als eine steuerbare Last im Energieverbund vorgesehen. Dabei wird, wie vorstehend beschrieben, für jede steuerbare Last eine Lastprognose erstellt und nachfolgend als steuerbare Last in den Einsatzplan aufgenommen. Insbesondere durch Vorsehen von mehr als einer steuerbaren Last im Energieverbund ist es möglich Lastprognosen an die zentrale Energieversorgung zu senden.

Vorzugsweise wird für die Erstellung des Einsatzplans eine erste Optimierungsgröße gewählt, wobei die Optimierungsgröße für den Einsatzplan maximiert bzw. minimiert wird. Dabei handelt es sich um eine verbundweite, gemeinsame Optimierungsgröße. Bei der ersten Optimierungsgröße kann es sich beispielsweise um die Gesamtlast insbesondere des jeweiligen Energieträgers innerhalb des Energieverbundes handeln.

Alternativ oder zusätzlich hierzu kann es sich um die Energiekosten handeln. Dabei wird der Einsatzplan dahingehend optimiert, dass die erste Optimierungsgröße durch den erstellten Einsatzplan maximiert bzw. minimiert wird. Handelt es sich somit beispielsweise bei der ersten Optimierungsgröße um die Gesamtlast insbesondere des jeweiligen Energieträgers innerhalb des Energieverbunds oder die Kosten für die Energieerzeugung bzw. -bereitstellung, wird der Einsatzplan dahingehend optimiert und erstellt, sodass die erste Optimierungsgröße minimiert wird zur Vermeidung von Lastspitzen innerhalb des Energieverbundes und/oder unnötiger Kosten bei der Energiebereitstellung.

Alternativ oder zusätzlich hierzu handelt es sich bei der ersten Optimierungsgröße um einen Energieerzeuger. So kann beispielsweise beabsichtigt sein, möglichst viel Energie aus regenerativen Energiequellen zu verwenden. Somit wird der Einsatzplan dahingehend optimiert, dass die erste Optimierungsgröße maximiert wird und ein maximaler Anteil aus regenerativen Energien zur Verfügung gestellt wird.

Vorzugsweise weist mindestens eine Last einen Verbraucher und/oder einen Energieerzeuger und/oder Energiespeicher auf. Insbesondere weisen mehrere Lasten einen Energieverbrauch und insbesondere einen Energieerzeuger und/oder Energiespeicher auf. Bevorzugt weisen alle Lasten einen Energieverbrauch und insbesondere einen Energieerzeuger und/oder einen Energiespeicher auf. Dabei können alle Lasten gleich ausgebildet sein hinsichtlich der Energieverbraucher, Energieerzeuger und Energiespeicher. Alternativ sind mindestens zwei Lasten diesbezüglich unterschiedlich ausgebildet. Bei dem Energieverbraucher handelt es sich beispielsweise um bekannte HLK-Anlagen und umfasst dabei ebenfalls die Bauphysik des Gebäudes oder Gebäudekomplexes als thermodynamisches System. Bei dem Energieerzeuger handelt es sich beispielsweise um eine oder mehrere Photovoltaikanlagen, eine oder mehrere Solarthermieanlagen, ein oder mehrere Windkraftanlagen oder dergleichen. Bei den Energiespeichern handelt es sich um jegliche Form zur Speicherung der Energie wie beispielsweise einen oder mehrere Wärme-/Kältespeicher oder Stromspeicher, insbesondere Batterien oder Kondensatoren.

Vorzugsweise weist mindestens eine steuerbare Last einen Energieerzeuger und/oder einen Energiespeicher auf. Sodann wird für jeden Energieerzeuger und/oder jeden Energiespeicher eine Energieerzeuger-/Energiespeicherprognose ermittelt. Die Energieerzeuger-/Energiespeicherprognose ermittelt dabei die voraussichtlich zu erwartende Energie, welche durch die jeweiligen Energieerzeuger anteilig oder in vollem Umfang zur Verfügung gestellt wird. Dabei wird ebenfalls der Einsatz von Energiespeichern berücksichtigt, welche geladen werden und ihre Energie zu einem späteren Zeitpunkt an die Verbraucher der Last abgeben können zur Reduzierung der von extern benötigten Energie und damit verbundenen Kosten zur Einhaltung des Klimaprofils.

Dabei wird die Energieerzeuger-/Energiespeicherprognose auf Grundlage historischer Daten für die jeweiligen Energieerzeuger und/oder Energieverbraucher ermittelt. Weiterhin können andere Einflüsse ebenfalls berücksichtigt werden, wie beispielsweise Außentemperatur, Windgeschwindigkeit, Sonneneinstrahlung oder dergleichen, welche allesamt Einfluss auf die Energieerzeugung haben können.

Sodann werden Energieerzeuger-/Energiespeicher-Steuerdaten ermittelt auf Grundlage der Energieerzeuger-/Energiespeicherprognose für den Einsatz und die Steuerung der Energieerzeuger und/oder der Energiespeicher der steuerbaren Lasten.

Weiter wird eine zweite gemeinsame, verbundweite Optimierungsgröße gewählt, wobei der Einsatz des Energieerzeugers und/oder des Energiespeichers optimiert wird zur Minimierung/Maximierung der zweiten Optimierungsgröße. Bei der zweiten Optimierungsgröße kann es sich beispielsweise um die Energiebereitstellungskosten und/oder die Gesamtlast insbesondere des jeweiligen Energieträgers innerhalb des Energieverbundes handeln. Dabei wird der Einsatz und insbesondere der Einsatzzeitpunkt der Energieerzeuger und/oder des Energiespeichers optimiert zur Minimierung/Maximierung der zweiten Optimierungsgröße. Dabei kann die zweite Optimierungsgröße identisch zu der ersten Optimierungsgröße gewählt werden. Sind somit innerhalb des Energieverbundes Energieerzeuger und/oder Energiespeicher vorgesehen, so werden die erstellten Energieerzeuger-/Energiespeicher-Steuerdaten berücksichtigt bei der Erstellung des Einsatzplans der jeweiligen Energie verbrauchenden Lasten. So kann beispielsweise die Energie, erzeugt von einem Energieerzeuger innerhalb eines Gebäudes oder Gebäudekomplexes, bei der Erstellung des Einsatzplans berücksichtigt werden, da die von dem Energieerzeuger erzeugte Energie gerade nicht von der zentralen Energieversorgung bereitgestellt werden muss.

Ähnlich erfolgt eine Berücksichtigung der Energiespeicher, wobei die Energiespeicher zu einem vorgegebenen Zeitpunkt gemäß dem Einsatzplan geladen werden, wenn beispielsweise die Gesamtlast innerhalb des Energieverbundes oder die Kosten zur Bereitstellung der Energie, welche durch den Energiespeicher gespeichert werden soll, niedrig sind. Sodann kann die gespeicherte Energie der Energiespeicher gemäß dem Einsatzplan bereitgestellt werden und muss somit gerade nicht von der zentralen Energieversorgung geliefert werden.

Vorzugsweise handelt es sich bei den Klimakenngrößen um die Raumtemperatur und/oder die Luftqualität. Dabei ist insbesondere durch das Klimaprofil ein gewünschter zeitlicher Verlauf dieser Klimakenngrößen korreliert mit der Tageszeit vorgegeben, wobei das Klimaprofil als zulässiges Klimakomfortband definiert ist mit einer Obergrenze und einer Untergrenze. Dieses Klimakomfortband definiert den Wohlfühlbereich hinsichtlich der betrachteten Klimakenngröße.

Vorzugsweise weist der Energieverbund mindestens eine oder mehrere nicht-steuerbare Lasten auf. Dabei handelt es sich einerseits um Energieverbraucher, deren Energieverbrauch nicht durch geeignete Steuersignale einer zentralen Steuerungseinheit beeinflusst werden kann. Gleichwohl kann für die nicht-steuerbaren Lasten der Energieverbrauch zur Erstellung der Lastenprognosen erfasst werden. Gleiches gilt andererseits für die Energieerzeuger und/oder Energiespeicher der nicht-steuerbaren Lasten, sofern vorgesehen. Somit kann der Saldo-Energieverbrauch der nicht-steuerbaren Lasten aus Verbrauch, Speicherung und Erzeugung bei der Erstellung des Einsatzplanes berücksichtigt werden.

Vorzugsweise wird eine Optimierung des Energiebedarfs jeder steuerbaren Last individuell durchgeführt. Für die Optimierung wird ein Modell für mindestens eine steuerbare Last erstellt und daraus unter Einsatz eines Optimierungsverfahrens die optimalen Steuerdaten für z.B. HLK-Anlagen der jeweiligen steuerbaren Last ermittelt. So können für die Optimierung weitere Informationen wie beispielsweise Energiepreise, Außentemperatur und/oder Sonneneinstrahlung, Windgeschwindigkeit oder dergleichen berücksichtigt werden. Weitere Merkmale der Optimierung des Energiebedarfs einer einzelnen steuerbaren Last ergeben sich beispielsweise aus EP 1 134 508.

Vorzugsweise handelt es sich bei der Energie um einen oder mehrere verschiedene Energieträger wie Wärme, Strom, Kälte oder Brennstoffe wie beispielsweise Gas oder Öl.

Weiterhin betrifft die vorliegende Erfindung ein Energieverbundsystem mit mindestens einer Last, wobei es sich bei der Last insbesondere um einen Verbraucher und/oder Energiespeicher und/oder Energieerzeuger von Energie innerhalb eines Gebäudes oder eines Gebäudekomplexes handelt. Dabei ist die mindestens eine Last verbunden mit einer zentralen Steuerungseinheit zum Empfangen eines gemessenen Energieverbrauchs der mindestens eine Last, wobei die Steuerungseinheit ausgebildet ist, aus dem empfangenen Energieverbrauch jeder Last Lastprognosen zu erstellen. Dabei kann die Verbindung der Last mit der zentralen Steuerungseinheit beispielsweise über das Internet und insbesondere eine gesicherte Verbindung erfolgen.

Weiterhin ist die mindestens eine Last mittels einer Energieversorgungsleitung mit einer zentralen Energieversorgung verbunden zur Bereitstellung von Energie an die Last. Dabei ist innerhalb des Energieverbundsystems mindestens eine steuerbare Last vorgesehen. Dabei ist die steuerbare Last zu verstehen als ein Gebäude oder Gebäudekomplex mit steuerbaren Verbrauchern, beispielsweise steuerbaren HLK-Anlagen, wobei der Energieverbrauch der steuerbaren Last durch Steuersignale von außen beeinflusst und verändert werden kann, beispielsweise durch eine zentrale Steuerungseinheit. Insbesondere handelt es sich bei einer solchen steuerbaren Last um ein Gebäude oder Gebäudekomplex, welches beispielsweise eine Steuerung gemäß der EP 1 134 508 aufweist.

Erfindungsgemäß ist die Steuerungseinheit weiter ausgebildet, für mindestens eine steuerbare Last anhand der Lastprognosen einen Einsatzplan zu erstellen, welcher die Verteilung der Energie vorgibt insbesondere mit den mindestens erforderlichen Betriebszeiten sowie zulässigen Wertebereichen der Verteilung zur Steuerung der im Energieverbund vorhandenen steuerbaren Lasten und somit den Energieverbrauch der einzelnen steuerbaren Lasten auf Grundlage der erstellen Lastprognosen zentral beeinflusst bzw. steuert. Somit ist mindestens ein Einsatzplan für mindestens eine steuerbare Last innerhalb des Energieverbundes auf Grundlage von Lastprognosen und/oder Energiepreisen und/oder Leistungspreisen gegeben. Sodann wird durch die zentrale Steuerungseinheit der Energieverbrauch der mindestens einen steuerbaren Last auf Basis des Einsatzplans und des Klimaprofils erzeugter Steuerdaten gesteuert.

Weiterhin ist das Energieverbundsystem weitergebildet anhand der Merkmale des vorstehend beschriebenen Verfahrens.

### DETAILLIERTE BESCHREIBUNG EINER AUSFÜHRUNGSFORM

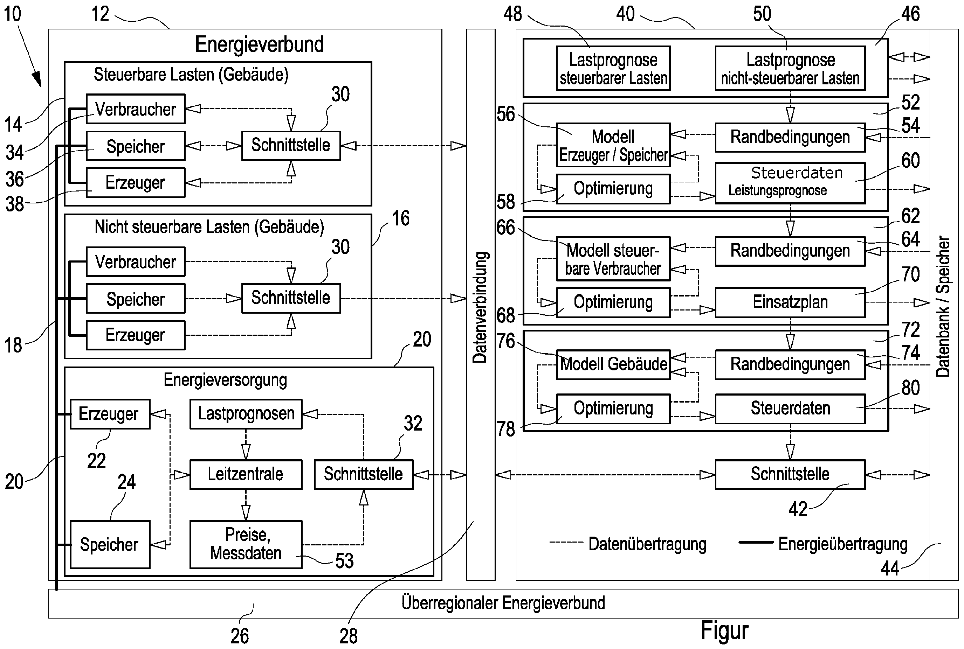

Nachfolgend wird die Erfindung anhand einer bevorzugten Ausführungsform unter Bezugnahme auf die beigefügte Figur näher erläutert.

Die Figur zeigt ein Energieverbundsystem 10 mit einem regionalen oder lokalen Energieverbund 12. Bei einem Energieverbund handelt es sich um ein System aus mehreren Lasten bzw. Gebäuden, welche zumindest eine gemeinsame Energiequelle aufweisen. Dabei ist keine geographische Abgrenzbarkeit auf ein bestimmtes Areal oder dergleichen erforderlich. Vielmehr wird der Energieverbund durch die Verbindung mittels gemeinsamer Energieversorgungsleitungen 18 und einer gemeinsamen Energiequelle beispielsweise durch einen regionalen Energieversorger 20 definiert. Dieser Energieverbund 12 weist eine oder mehrere steuerbare Lasten 14 auf.

Zusätzlich hierzu kann der Energieverbund 12 eine oder mehrere nicht-steuerbare Lasten 16 aufweisen. Dabei sind die steuerbaren Lasten 14 Lasten, bei denen der Energieverbrauch über geeignete Steuersignale durch eine zentrale Steuerungseinheit 40 von außerhalb gesteuert oder zumindest beeinflusst werden können. Hingegen kann der Energieverbrauch nicht-steuerbarer Lasten 16 nicht von extern gesteuert werden und ergibt sich ausschließlich aus der lokalen Automation der jeweiligen nicht-steuerbaren Lasten 16.

Bei den Lasten 14, 16 kann es sich beispielsweise um Verbraucher und/oder Energieerzeuger und/oder Energiespeicher innerhalb von Gebäuden oder Gebäudekomplexen handeln. Insbesondere wird durch den Energieverbund 12 ein abgrenzbares Areal, ein Campus oder Gebiet über Energieversorgungsleitungen 18 mit einem Energieversorger 20 verbunden. Über die Energieversorgungsleitung 18 wird von dem Energieversorger 20 an die steuerbaren Lasten 14 und nicht-steuerbaren Lasten 16 Energie zur Verfügung gestellt. Hierzu weist der Energieversorger 20 eigene Energieerzeuger 22 und/oder Energiespeicher 24 auf. Alternativ oder zusätzlich hierzu wird durch den Energieversorger 20 Energie von einem überregionalen Energieverbund 26 den steuerbaren Lasten 14 und nicht-steuerbaren Lasten 16 zur Verfügung gestellt.

Weiterhin weist das Energieverbundsystem 10 eine Datenverbindung 28 auf, wobei die steuerbaren Lasten 14 und nicht-steuerbaren Lasten 16 über geeignete Schnittstellen 30 über die Datenverbindung 28 zum Austausch von Daten mit der zentralen Steuerungseinheit 40 verbunden sind. Bei der Datenverbindung 28 kann es sich um das Internet oder das Mobilfunknetz handeln. Insbesondere handelt es sich bei der Datenverbindung 28 um eine gesicherte Datenverbindung wie beispielsweise ein VPN. Dabei kann insbesondere die Datenübertragung drahtgebunden oder drahtlos erfolgen.

Ebenso weist der Energieversorger 20 eine geeignete Schnittstelle 32 auf zum Austausch von Daten mittels der Datenverbindung 28.

Die mindestens eine steuerbare Last 14 weist insbesondere mindestens einen Verbraucher 34 auf. Hierbei kann es sich insbesondere um eine Heizungsanlage, eine Lüftungsanlage und/oder eine Klimaanlage handeln. Insbesondere sind als Verbraucher alle Komponenten eines Gebäudes zu verstehen, welche in Wechselwirkung mit der Bauphysik Energie verbrauchen.

Alternativ oder zusätzlich zu mindestens einem Verbraucher 34 kann die steuerbare Last 14 einen oder mehrere Energiespeicher 36 aufweisen. Hierbei handelt es sich beispielsweise um einen Wärmespeicher insbesondere auf Basis eines Wärmespeichermediums wie beispielsweise Wasser, Salze oder Gesteine.

Alternativ hierzu handelt es sich um einen Speicher für elektrische Energie wie beispielsweise einen Akkumulator oder einen Kondensator. Dabei können unterschiedliche Speicher für unterschiedliche Energieformen miteinander kombiniert werden innerhalb einer steuerbaren Last 14.

Alternativ oder zusätzlich zum Vorsehen eines Energiespeichers 36 kann einen oder mehrere Energieerzeuger 38 vorgesehen sein. Hierbei handelt es sich beispielsweise um eine Photovoltaikanlage oder ein Windrad zur Erzeugung von elektrischer Energie. Alternativ oder zusätzlich hierzu kann eine oder mehrere Solarthermieanlagen vorgesehen werden zur Erzeugung von Wärmeenergie. Dabei können innerhalb einer Last unterschiedliche Erzeuger für unterschiedliche Energieformen vorgesehen und miteinander kombiniert werden.

Ebenso weist eine nicht-steuerbare Last 16 einen oder mehrere Verbraucher 34 auf und kann, alternativ oder zusätzlich, einen oder mehrere Energiespeicher 36 und/oder einen oder mehrere Energieerzeuger 38 aufweisen.

Durch das Vorsehen der HLK-Anlage als Verbraucher 34 innerhalb der steuerbaren Last 14 oder der nicht-steuerbaren Last 16 in Kombination mit einem Energiespeicher 36 und/oder einem Energieerzeuger 38, sofern vorgesehen, erfolgt eine Klimasteuerung innerhalb der Gebäude. Hierzu ist ein Klimaprofil vorgesehen, wobei ein Klimaprofil die Vorgabe eine Klimakenngröße über den Tagesverlauf und insbesondere Hauptnutzungs- und Nebennutzungsseiten des jeweiligen Gebäudes darstellt. Dabei ist durch das Klimaprofil insbesondere ein zulässiges Klimakomfortband vorgegeben innerhalb dessen sich Klimakenngröße befinden muss. Dieses Klimakomfortband wird auch als Komfortbereich bezeichnet. So kann es sich bei der Klimakenngröße beispielsweise um die Raumtemperatur handeln. Für die Raumtemperatur gibt es eine Untergrenze sowie eine Obergrenze, innerhalb derer die Raumtemperatur als angenehm empfunden wird. Das Klimaprofil definiert mit seiner Obergrenze und seiner Untergrenze ein zulässiges Klimakomfortband. Dieses Klimakomfortband definiert den Wohlfühlbereich hinsichtlich der betrachteten Klimakenngröße.

Es ist somit nicht erforderlich die HLK-Anlage so zu steuern, dass ein vorgegebener Zielwert erreicht werden muss. Vielmehr muss sich die jeweilige Klimakenngröße lediglich innerhalb des vorgegebenen Klimakomfortbandes befinden, kann sich in diesem Klimakomfortband jedoch ohne Einschränkung des Komforts nach Zeit und Niveau bewegen. Darin ist die erfindungsgemäße Flexibilität aus Raumklima hinsichtlich der Leistungsaufnahme der Last nach Zeit und Höhe begründet.

Über die Datenverbindung 28 ist der Energieverbund 12 mit der zentralen Steuerungseinheit 40 verbunden. Über die Schnittstellen 30 der Lasten 14, 16 werden Energieverbräuche mittels der Datenverbindung 28 und einer geeigneten Schnittstelle 42 der zentralen Steuereinheit 40 in einem Speicher bzw. in einer Datenbank 44 hinterlegt. Diese gespeicherten, historischen Verbrauchsdaten werden in einem ersten Modul 46 zur Erzeugung einer Lastprognose der steuerbaren Lasten 48 und ebenso zur Erzeugung einer Lastprognose für die nicht-steuerbaren Lasten 50 genutzt. Somit wird auf Grundlage der gespeicherten, historischen Verbrauchswerte der Lasten 14, 16 innerhalb des Energieverbundes 12 eine Prognose erstellt hinsichtlich dem zu erwartenden Energieverbrauch der jeweiligen Lasten 14, 16.

Im Beispiel der Figur sind lediglich mindestens eine steuerbare Last 14 und/oder mindestens eine nicht-steuerbare Last 16 vorgesehen. Die Erfindung ist nicht auf nur eine steuerbare Last beschränkt. Alternativ hierzu können weitere steuerbare Lasten 14 und/oder weitere nicht-steuerbare Lasten 16 vorgesehen sein.

Aus der Lastprognose für die steuerbaren Lasten 14 und nicht-steuerbaren Lasten 16, kann der regionale Energieversorger 20 mittels eines Preismoduls 53 den Energiepreis und/oder Leistungspreis entsprechend dem zu erwartenden Verbrauch und/oder zeitlichen Verlauf des Lastgangs der Energieversorgungsleitung 18 anpassen. Dieser vorgegebene Energiepreis und/oder Leistungspreis kann sodann als Grundlage für die Optimierung des Energieverbundes herangezogen werden. Alternativ hierzu kann der regionale Energieversorger 20 einen festen Energiepreis und/oder Leistungspreis vorsehen oder an andere Bedingungen knüpfen, wie beispielsweise die Beschaffungskosten der Energie vom Überregionalen Energieverbund 26.

Sofern Energieerzeuger 38 und/oder Energiespeicher 36 im Energieverbund 12 vorhanden sind, wird in einem zweiten Modul 52 auf Grundlage der ermittelten Lastprognosen 50 der nicht-steuerbaren Lasten 16 sowie den Lastprognosen 48 der steuerbaren Lasten 14 anhand eines Modells 56 der Energieerzeuger 38 und Energiespeicher 36 eine Optimierung der Steuerung der Energieerzeuger 38 und/oder Energiespeicher 36 ermittelt, um daraus Energieerzeuger-/ Energiespeicher-Steuerdaten 60 abzuleiten. Als Randbedingungen 54 für die Optimierung können insbesondere berücksichtigt werden:
- Energiepreise,
- Lastprognosen 48 der steuerbaren Erzeuger,
- Lastprognosen 50 der nicht-steuerbaren Erzeuger,
- Lastprognosen 50 der nicht-steuerbaren Verbraucher.

Hierzu wird eine Optimierungsgröße gewählt, wobei der Einsatz der Energieerzeuger 38 und/oder der Energiespeicher 36 dahingehend optimiert wird, sodass die Optimierungsgröße minimiert bzw. maximiert ist. Bei der Optimierungsgröße handelt es sich beispielsweise um den Gesamtenergieverbrauch innerhalb des Energieverbundes und/oder den Energiepreisen vorgegeben vom regionalen Energieversorger 20. Somit können eine Leistungsprognose 60 und Energieerzeuger-/Energiespeicher-Steuerdaten ermittelt werden, sodass die steuerbaren Energiespeicher 36 und/oder Energieerzeuger 38 optimal innerhalb dem Energieverbund eingesetzt werden können, um die gewählte Optimierungsgröße zu minimieren/maximieren.

Selbstverständlich ist dabei das zweite Modul 52 nur dann vorgesehen, sofern der Energieverbund mindestens einen Energieerzeuger 38 und/oder einen Energiespeicher 36 aufweist. Andernfalls entfällt das zweite Modul 52.

In einem dritten Modul 62 werden die zuvor ermittelten Lastprognosen 48 der steuerbaren Lasten 14 sowie die Lastprognosen 50 der nicht-steuerbaren Lasten 16 sowie die Leistungsprognosen der Energieerzeuger 38 und Energiespeicher 36 als Randbedingung 64 herangezogen. Weiterhin fließen als Randbedingung 64 die Klimaprofile der steuerbaren Lasten 14 ein. Weiterhin wird eine Optimierungsgröße gewählt. Bei dieser Optimierungsgröße kann es sich um dieselbe Optimierungsgröße handeln, auf die der Einsatz der Energieerzeuger 38 und/oder Energiespeicher 36 optimiert wurde. Als Randbedingungen 64 für die Optimierung können insbesondere herangezogen werden:
- Energiepreise,
- Klimaprofile,
- Lastprognose steuerbare Erzeuger,
- Lastprognose steuerbare Verbraucher,
- Lastprognose nicht steuerbare Erzeuger,
- Lastprognose nicht steuerbare Verbraucher.

Alternativ handelt es sich um eine davon abweichende Optimierungsgröße. Insbesondere handelt es sich bei der Optimierungsgröße beispielsweise um die Gesamtlast innerhalb des Energieverbundes 12 oder die Bezugskosten der Energie 53. Sodann wird in einem Prozess ein Modell der steuerbaren Verbraucher 66 herangezogen, um in einer Optimierung 68 einen Einsatzplan 70 zu erstellen. Dieser Einsatzplan 70 ist dahingehend optimiert, dass die Optimierungsgröße maximiert bzw. minimiert wird. Handelt es sich beispielsweise bei der Optimierungsgröße um die Gesamtlast des Energieverbundes 12, so kann der Einsatzplan 70 derart ausgestaltet sein, dass Lastspitzen innerhalb des Energieverbundes reduziert werden und mittels des Einsatzplans 70 eine minimale Gesamtlast innerhalb des Energieverbundes 12 realisiert wird.

Alternativ oder zusätzlich hierzu handelt es sich bei der Optimierungsgröße um die Bezugskosten der Energie, welche ebenfalls aufgrund der Optimierung 68 für die Erstellung des Einsatzplans 70 reduziert/minimiert wird. Der dabei ermittelte Einsatzplan 70 kann dabei in einer Datenbank 44 gespeichert werden.

In einem dritten Modul 72 wird der Einsatzplan 70 als Randbedingung 74 herangezogen. Zusätzlich werden die Klimaprofile der einzelnen steuerbaren Lasten berücksichtigt. Weiterhin können externe Größen wie beispielsweise Außentemperatur, Windstärke, Sonneneinstrahlung oder dergleichen als Randbedingungen berücksichtigt werden. Sodann werden unter Verwendung eines Gebäudemodells 76, das thermodynamische und bauphysikalische Aspekte des jeweiligen Gebäudes oder Gebäudekomplex berücksichtigt, und mittels eines Optimierungsverfahrens 78. Steuerdaten 80 für steuerbare Lasten 14 bzw. für deren Verbraucher 34 (z.B. HLK-Anlagen) erzeugt. Als Randbedingungen 74 für die Optimierung können insbesondere herangezogen werden:
- Energiepreise,
- Klimaprofile,
- Wetterdaten,
- Interne Last Profile,
- HLK-Verfügbarkeitsprofile,
- Einsatzplan.

Somit werden im dritten Modul 72 Steuerdaten 80 für jede der steuerbaren Lasten 14 erzeugt. Die Steuerdaten 80 können in einer Datenbank 44 gespeichert werden.

Weiterhin werden die Steuerdaten 80 über die Schnittstelle 42 und die Datenverbindung 28 an die steuerbaren Lasten 14 übertragen zur Steuerung der Verbraucher 34 der steuerbaren Lasten 14 und insbesondere zur Ansteuerung der HLK-Anlagen der steuerbaren Lasten 14 zur Steuerung der Klimabedingungen im jeweiligen Gebäude.

Somit wird durch die Erstellung eines Einsatzplans 70 eine Optimierung durchgeführt für eine Mehrzahl von verteilten Lasten innerhalb eines Energieverbundes. Somit wird der Energieverbrauch innerhalb des Energieverbundes gesteuert und optimiert auf eine Optimierungsgröße beispielsweise zur Vermeidung von Lastspitzen innerhalb des Energieverbunds und/oder zur Reduzierung der Energiebezugskosten.

Dabei wird das zulässige Klimakomfortband der jeweiligen Klimaprofile ausgenutzt und eine Ansteuerung der steuerbaren Lasten erfolgt dergestalt, dass die Optimierungsgröße maximiert bzw. minimiert wird unter der Randbedingung, dass die Klimakenngrößen innerhalb des zulässigen Klimakomfortbandes des jeweiligen Klimaprofils verbleiben. Somit wird die Flexibilität nach Zeit und Niveau, welche durch die Klimaprofile zur Verfügung gestellt wird, ausgenutzt für eine optimierte Steuerung der Lasten eines Energieverbundes innerhalb der einzelnen Gebäude.

Gleichzeitig wird die Baumasse/Bausubstanz der einzelnen Gebäude ausgenutzt als thermische/träge Masse. Aufgrund der thermischen Trägheit von Gebäuden und unter Ausnutzung dieser Trägheit kann eine Flexibilität in der Steuerung der steuerbaren Lasten und eine Reduktion von Lastspitzen erreicht werden. So können beispielsweise die steuerbaren Lasten innerhalb des Energieverbundes ihre Aufwärmphase (Heizbetrieb) oder Abkühlphase (Kühlbetrieb) nach der Nachtabsenkung früher starten als es für die nicht-steuerbaren Lasten erforderlich ist. Der Einsatzplan 70 übernimmt dabei die zeitliche Verteilung der im Energieverbund vorhandenen steuerbaren Lasten 14 im Sinne der Reduktion der Spitzenlast und/oder Energiekosten und/oder Leistungskosten innerhalb des Energieverbundes 12.

Hierbei kann die Steuerung der steuerbaren Lasten dazu führen, dass die Temperatur nach Niveau und Zeit variiert, aber innerhalb des Klimakomfortbandes des Klimaprofils verbleibt.

Die Aufwärmphase (Heizbetrieb) oder Abkühlphase (Kühlbetrieb) der steuerbaren Lasten wird dabei möglichst zeitversetzt zu den nicht-steuerbaren Lasten gestartet. Aufgrund der thermischen Trägheit des Gebäudes der steuerbaren Lasten verändert sich die Raumtemperatur nur langsam. Wurde also zum Ende einer Aufwärmphase über die Mindesttemperatur des Komfortklimabandes hinaus erwärmt, so steht zu Beginn der Hauptnutzungszeit des Gebäudes die Mindesttemperatur bereits ohne Komfortverlust zur Verfügung. Somit kann der Energieverbrauch innerhalb des Energieverbundes aufgrund der erhöhten Flexibilität der Gebäude auf Grundlage des Einsatzplans verteilt und Lastspitzen vermieden und/oder Energiekosten und/oder Leistungskosten innerhalb des Energieverbundes minimiert werden. Alternativ oder zusätzlich hierzu können die steuerbaren Lasten derart angesteuert werden, dass Energie verbraucht wird zu einem Zeitpunkt, zu dem die Kosten für die Energie niedriger sind als zu anderen Zeitpunkten.

## Patentansprüche

1. Verfahren zur Steuerung dezentraler Lasten in einem Energieverbund,
mit mindestens einer Last, wobei es sich bei der Last insbesondere um einen Verbraucher und/oder Energiespeicher und/oder Energieerzeuger von Energie innerhalb eines Gebäudes oder eines Gebäudekomplexes handelt;
wobei die mindestens eine Last mittels einer Energieversorgungsleitung mit einer zentralen Energieversorgung verbunden ist zur Bereitstellung von Energie an die Last zur Klimasteuerung;
wobei mindestens eine steuerbare Last vorgesehen ist; und
wobei das Verfahren die Schritte aufweist:
Ermitteln einer Lastprognose für mindestens eine Last;
Vorgeben mindestens eines Klimaprofils für mindestens eine steuerbare Last, wobei das Klimaprofil mindestens für eine Klimakenngröße ein vorgegebenes Klimakomfortband umfasst;
Erstellen mindestens eines Einsatzplans für mindestens eine steuerbare Last auf Grundlage der Lastprognosen und insbesondere Energiepreisen und/oder Leistungspreisen; und
Ansteuern der mindestens einen steuerbaren Last auf Basis des Einsatzplans und des anhand des Klimaprofils erzeugter Steuerdaten, wobei der resultierende Verlauf der Klimakenngröße innerhalb des vorgegebenen Komfortklimabandes des Klimaprofils liegt.

2. Verfahren nach Anspruch 1, **dadurch gekennzeichnet, dass** mehr als eine steuerbare Last vorgesehen ist.

3. Verfahren nach Anspruch 1 oder 2, **dadurch gekennzeichnet, dass** für die Erstellung des Einsatzplans eine erste Optimierungsgröße gewählt wird, wobei insbesondere auf Basis der Lastprognosen und/oder Energiepreise und/oder Leistungspreise die Optimierungsgröße für den Einsatzplan maximiert/minimiert wird.

4. Verfahren nach einem der Ansprüche 1 bis 3, **dadurch gekennzeichnet, dass** mindestens eine steuerbarere Last einen Energieerzeuger und/oder einen Energiespeicher aufweist, wobei
für einen oder mehrere Energieerzeuger und/oder Energiespeicher eine oder mehrere Energieerzeuger-/Energiespeicher-Lastprognosen ermittelt wird;
wobei eine zweite Optimierungsgröße gewählt wird, und
wobei Energieerzeuger-/Energiespeicher-Steuerdaten optimiert werden zur Minimierung/Maximierung der zweiten Optimierungsgröße.

5. Verfahren nach Anspruch 4, **dadurch gekennzeichnet, dass** die Energieerzeuger-/Energiespeicherprognose und insbesondere die Energieerzeuger-/Energiespeichersteuerdaten berücksichtigt werden bei der Erstellung des Einsatzplanes.

6. Verfahren nach einem der Ansprüche 1 bis 5, **dadurch gekennzeichnet, dass** es sich bei den Klimakenngrößen um die Raumtemperatur und/oder die Luftqualität handelt.

7. Verfahren nach einem der Ansprüche 1 bis 6, **dadurch gekennzeichnet, dass** der Energieverbund mindestens eine und insbesondere mehrere nicht-steuerbare Lasten aufweist.

8. Verfahren nach einem der Ansprüche 1 bis 7, **dadurch gekennzeichnet, dass** eine Optimierung des Energiebedarfs mindestens einer steuerbaren Last durchgeführt wird, wobei für die Optimierung ein Gebäudemodell für mindestens eine steuerbare Last erstellt wird als Rechenmodell und wobei Steuerdaten für die jeweilige steuerbare Last ermittelt werden auf Grundlage des Einsatzplans und des Gebäudemodells.

9. Verfahren nach einem der Ansprüche 1 bis 8, **dadurch gekennzeichnet, dass** es sich bei der Energie um einen oder mehrere Energieträger handelt.

10. Energieverbundsystem mit
mindestens einer Last, wobei es sich bei der Last insbesondere um einen Verbraucher und/oder Energiespeicher und/oder Energieerzeuger von Energie innerhalb eines Gebäudes oder Gebäudekomplexes handelt;
wobei die mindestens eine Last verbunden ist mit einer zentralen Steuerungseinheit zum Übertragen eines Energieverbrauchs der mindestens einen Last, wobei die Steuerungseinheit ausgebildet ist, aus dem übertragenen Energieverbrauch jeder Last eine Lastprognose zu erstellen;
wobei die mindestens eine Last mittels einer Energieversorgungsleitung mit einer zentralen Energieversorgung verbunden ist zur Bereitstellung von Energie an die Last zur Klimasteuerung;
wobei mindestens eine steuerbare Last vorgesehen ist, wobei für die mindestens eine steuerbare Last mindestens ein Klimaprofil vorgegeben ist, wobei das Klimaprofil mindestens für eine Klimakenngröße ein vorgegebenes Klimakomfortband umfasst;
wobei die Steuerungseinheit weiter ausgebildet ist einen Einsatzplan für mindestens eine steuerbare Last anhand der Lastprognosen zu erstellen; und
wobei die zentrale Steuerungseinheit ausgebildet den Energieverbrauch der steuerbaren Last zu steuern auf Basis des Einsatzplans und des anhand des Klimaprofils erzeugter Steuerdaten, wobei der resultierende Verlauf der Klimakenngröße innerhalb des vorgegebenen Komfortklimabandes des Klimaprofils liegt.

11. Energieverbundsystem nach Anspruch 10, **dadurch gekennzeichnet, dass** die Steuerungseinheit ausgebildet ist zur Ausführung des Verfahrens nach einem der Ansprüche 1 bis 9.
